# EUROPEAN PATENT APPLICATION

(11) **EP 4 520 154 A1**
(43) Date of publication of application: **12.03.2025**
(21) Application number: 24197965.7
(22) Date of filing: 02.09.2024
(51) Int. Cl.: A01C 7/02, A01C 17/00

(54) **HANDHELD POWER SPREADER**

(30) Priority: 08.09.2023 US 202363537363 P
(71) Applicant: Techtronic Cordless GP, Anderson, SC 29621 (US)
(72) Inventor: DAVIS, Isaac Finn, Anderson, 29621 (US); FROST, Stephen, Anderson, 29621 (US)
(74) Representative: Novagraaf Group

(57) **Abstract**

A spreader tool (10) includes a hopper (16) disposed above a base (28). The base (28) comprises a base opening (30) that forms an egress. The spreader tool (10) further includes an impeller (50) disposed below the hopper (16). The spreader tool (10) further includes a distribution gate (56) that is positioned below the hopper (16) and configured to selectively permit egress between the hopper (16) and the base (28). The spreader tool (10) further includes one or more motors (52, 54) operably coupled to a power unit (40) and the impeller (50) and the distribution gate (56). The one or more motors (52, 54) are configured to selectively rotate the impeller (50) and the distribution gate (56). The spreader tool (10) further includes a handle (42) having a trigger assembly (44).

## Description

### CROSS-REFERENCE TO RELATED APPLICATIONS

This application is a non-provisional application claiming the benefit of priority under 35 U.S.C. § 119(e) to U.S. Provisional Application No. 63/537,363, filed September 8, 2023, which is hereby incorporated by reference in its entirety.

### FIELD

The present disclosure generally pertains to spreaders, and more particularly to handheld spreaders for lawn and garden.

### BACKGROUND

Spreaders, such as seed spreaders, are designed to distribute seed from a container. However, spreaders may experience clogging, uneven distribution, or require adjustment of components to change distribution. As such, a spreader including improved distribution mechanisms would be advantageous and beneficial.

### BRIEF DESCRIPTION

Aspects and advantages of the spreader tools and methods in accordance with the present disclosure will be set forth in part in the following description, or may be obvious from the description, or may be learned through practice of the technology.

In accordance with one embodiment, a spreader tool is provided. The spreader tool includes a hopper disposed above a base. The base includes a base opening that forms an egress. The spreader tool further includes an impeller disposed below the hopper. The spreader tool further includes a distribution gate that is positioned below the hopper and configured to selectively permit egress between the hopper and the base. The spreader tool further includes one or more motors that is operably coupled to a power unit and the impeller and the distribution gate. the one or more motors is configured to selectively rotate the impeller and the distribution gate. The spreader tool further includes a handle having a trigger assembly. The trigger assembly being configured to selectively command articulation of energy from the power unit to operate the motor to rotate the impeller and the distribution gate.

In accordance with another embodiment, a method for distributing matter from a spreader tool is provided. The method includes electrically coupling a power unit to a first motor and a second motor. The method further includes operably coupling the first motor to an impeller. The method further includes operably coupling the second motor to a distribution gate positioned between a hopper egress opening and a base egress opening. The method further includes electrically coupling a trigger assembly to the first motor and the second motor. Actuation of the trigger assembly provides energy from the power unit to the first motor to spin the impeller and to the second motor to rotate the distribution gate to an open position.

In accordance with yet another embodiment, a handheld spreader tool is provided. The handheld spreader tool includes a hopper that is disposed above a base. The hopper includes a hopper opening forming an egress to the base. The base includes a base opening forming an egress from the base. The handheld spreader tool further includes an impeller disposed below the hopper. The handheld spreader tool further includes a distribution gate positioned below the hopper and above the base. The distribution gate is configured to selectively permit egress between the hopper and the base. The handheld spreader tool further includes a first motor and a second motor. The first motor electrically coupled to a power unit and operably coupled to the impeller. The first motor configured to selectively spin the impeller. The second motor electrically coupled to the power unit and operably coupled to the distribution gate positioned between the base opening and the hopper opening. The second motor configured to selectively open the distribution gate. The handheld spreader tool further includes a handle having a trigger assembly. The trigger assembly is electrically coupled to the first and second motors and configured to selectively command articulation of energy from the power unit to operate the first and second motors to rotate the impeller and open the distribution gate.

These and other features, aspects and advantages of the present spreader tools and methods will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present spreader tools and methods, including the best mode of making and using the present systems and methods, directed to one of ordinary skill in the art, is set forth in the specification, which makes reference to the appended figures, in which:
FIG. 1 is a perspective view of a spreader tool in accordance with embodiments of the present disclosure;
FIG. 2 is a perspective view of a spreader tool in accordance with embodiments of the present disclosure;
FIG. 3 is a perspective view of a spreader tool in accordance with embodiments of the present disclosure;
FIG. 4 is a perspective view of a spreader tool in accordance with embodiments of the present disclosure;
FIG. 5 is a side view of a spreader tool in accordance with embodiments of the present disclosure;
FIG. 6 is a rear view of a spreader tool in accordance with embodiments of the present disclosure;
FIG. 7 is a front view of a spreader tool in accordance with embodiments of the present disclosure;
FIG. 8 is a cross-sectional view of a spreader tool in accordance with embodiments of the present disclosure;
FIG. 9 is a cross-sectional view of a spreader tool in accordance with embodiments of the present disclosure;
FIG. 10 is a cross-sectional perspective view of a spreader tool in accordance with embodiments of the present disclosure;
FIG. 11 is a cross-sectional view of a spreader tool in accordance with embodiments of the present disclosure;
FIG. 12 is a perspective view of various components of a spreader tool 10 in accordance with exemplary aspects of the present disclosure;
FIG. 13 is a perspective view of various components of a spreader tool 10 in accordance with exemplary aspects of the present disclosure;
FIG. 14 is a perspective view of various components of a spreader tool 10 in accordance with exemplary aspects of the present disclosure;
FIG. 15 is a perspective view of various components of a spreader tool 10 in accordance with exemplary aspects of the present disclosure; and
FIG. 16 is a flow chart of a method for distributing matter from a spreader tool in accordance with embodiments of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

The term "radially" refers to the relative direction that is substantially perpendicular to an axial centerline of a particular component, the term "axially" refers to the relative direction that is substantially parallel and/or coaxially aligned to an axial centerline of a particular component and the term "circumferentially" refers to the relative direction that extends around the axial centerline of a particular component.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. When used in the context of an angle or direction, such terms include within ten degrees greater or less than the stated angle or direction. For example, "generally vertical" includes directions within ten degrees of vertical in any direction, e.g., clockwise or counter-clockwise.

The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

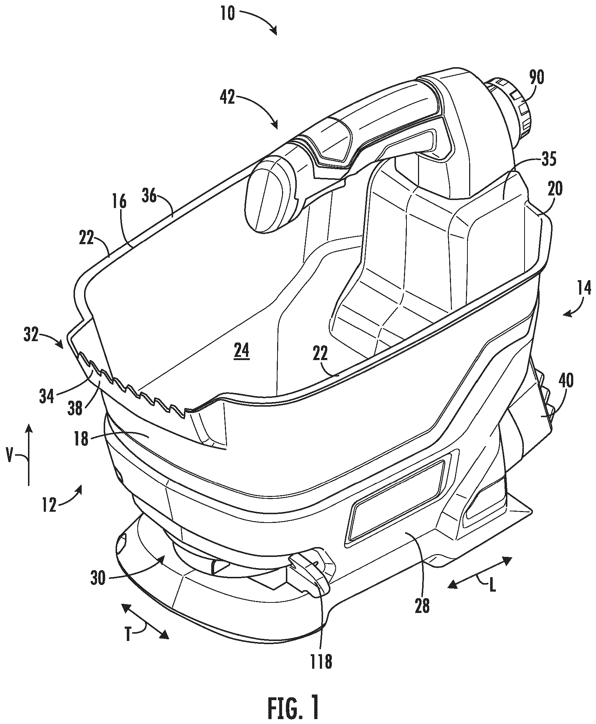

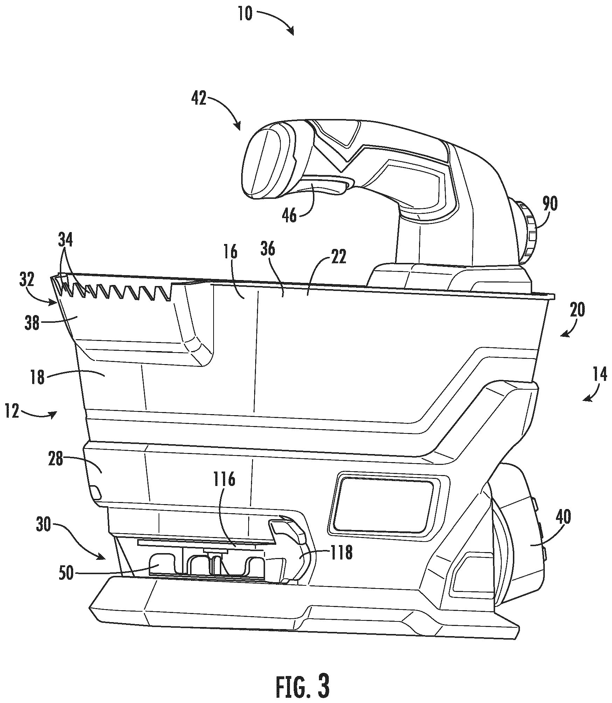

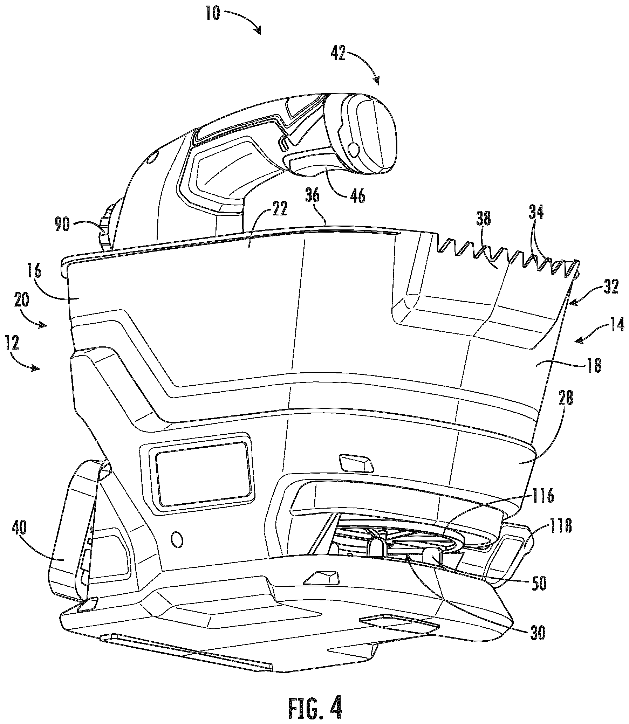

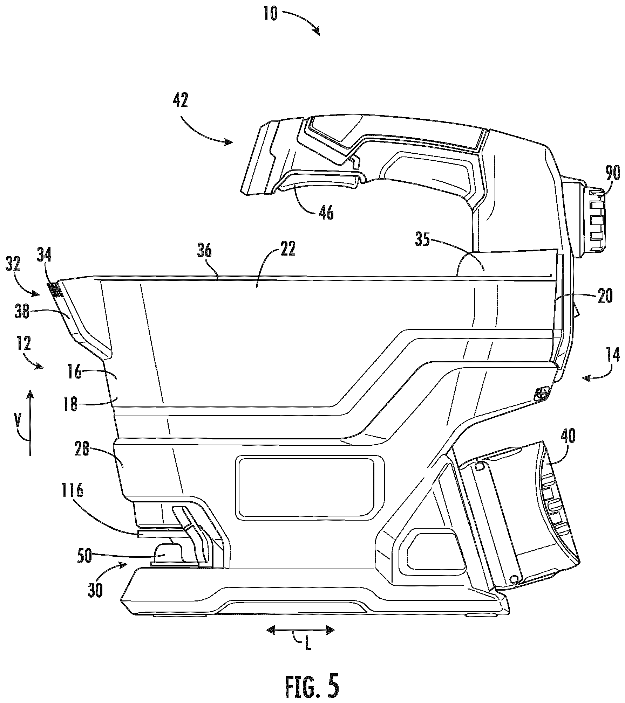

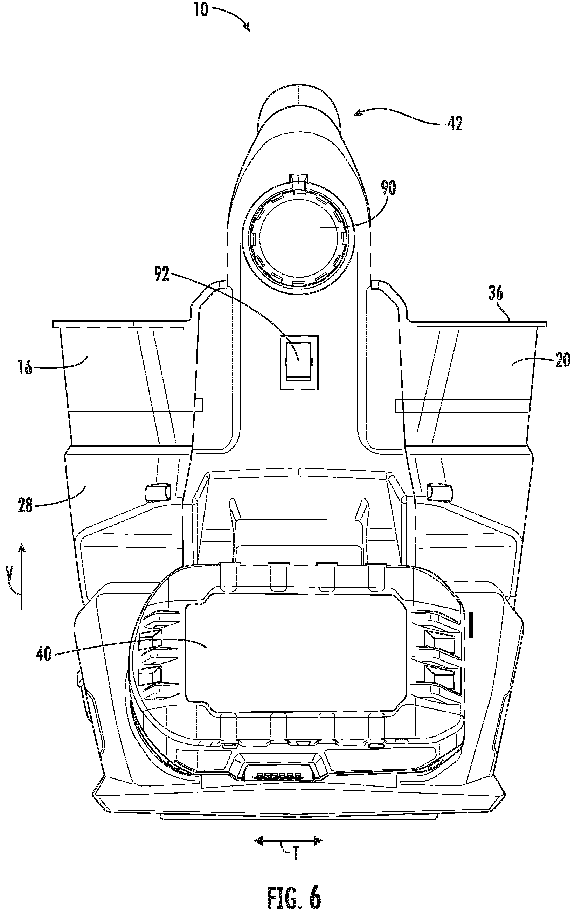

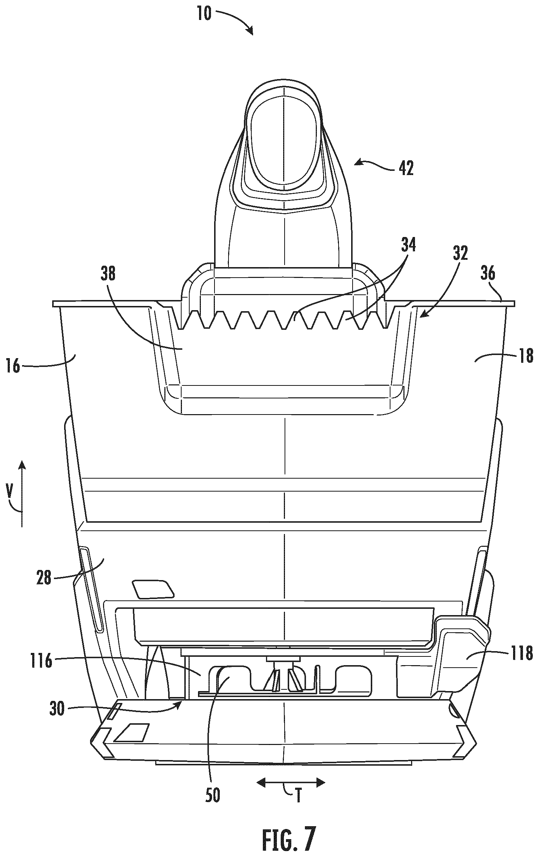

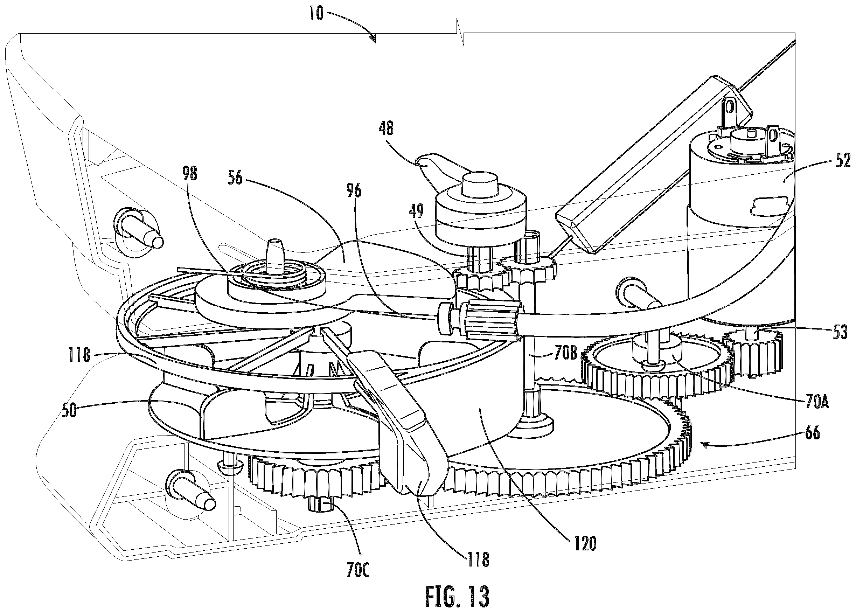

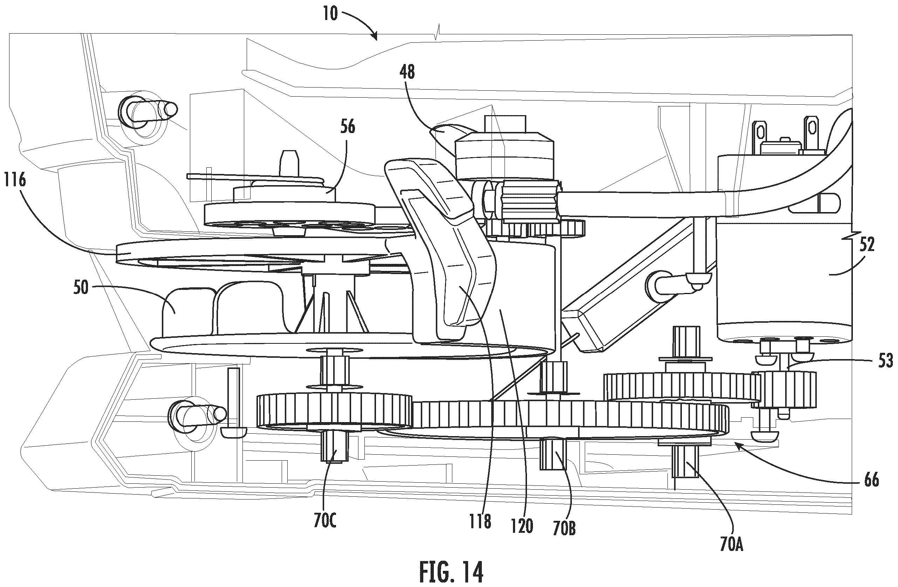

Referring now to the drawings, FIGS. 1-15 illustrate various views of a spreader tool 10 according to exemplary embodiments of the present subject matter. The spreader tool 10 may define a vertical direction V, a lateral direction L and a transverse direction T. The vertical, lateral and transverse directions are mutually perpendicular and form an orthogonal direction system. As used herein, the terms "top," "bottom," "above," and "below" may be with reference to the vertical direction V.

Embodiments of the spreader tool 10 may form a handheld spreader, such as for distributing seed, grain, or other matter. The spreader tool 10 may extend (e.g., longitudinally) between a front end 12 and a rear end 14. The spreader tool may include a hopper 16 disposed above (and coupled to) a base 28. The hopper 16 generally forms a bucket, vat, or walled container that defines a hopper cavity 24 within which matter (such as seeds, grains, etc.) is received and distributed therefrom. The hopper 16 may include a front wall 18 and a rear wall 20 spaced apart from one another along the longitudinal direction L. The hopper 16 may further include side walls 22 extending between the front wall 18 and the rear wall 20. The hopper 16 may further include a bottom wall 26, and the hopper cavity 24 may be defined collectively by the front wall 18, the rear wall 20, the side walls 22, and the bottom wall 26. The hopper may define an open top opposite the bottom wall 26 that allows for matter to be dispensed or inserted into the hopper cavity 24.

The hopper 16 may include a scoop 32 extending from (i.e., protruding from) from the front wall 18 and a mounting portion 35 extending from (i.e., protruding from) the rear wall 20. The scoop 32 may protrude (e.g., longitudinally) from the front wall 18 at an upper lip of the hopper 16. The scoop 32 may allow a user to easily fill the hopper 16. In exemplary embodiments, the scoop 32 may include a plurality of teeth 34 at an upper lip 36 (e.g., vertically outer edge) of the hopper 16. For example, the scoop 32 may include a funnel portion 38 extending from (e.g., protruding longitudinally) the front wall 18. The plurality of teeth 34 may each extend from the funnel portion 38 to a point at the upper lip 36.

The hopper 16 may be disposed above, and coupled to, the base 28. The base 28 may define a base opening 30 that forms an egress. That is, matter (e.g., seeds) stored in the hopper 16 may be distributed through the base opening 30 during operation of the spreader tool 10. For example, matter from the hopper 15 may flow or egress into the base 28 and be distributed out of the base opening 30. The base opening 30 may be disposed at the front end 12 of the spreader tool 10.

The spreader tool 10 may further include a power unit 40 coupled to the base 28. The power unit 40 may be positioned at a rear end of the base 28 (e.g., at the rear end 14 of the spreader tool 10 coupled to the base 28). The power unit 40 may be a battery or an electrical socket (which may be electrically couplable to a power source, such as a wall outlet). As discussed below, the power unit 40 may be electrically connected to one or more motors or other electrical components to allow for selective distribution of matter from the hopper 16. That is, the spreader tool 10 may be powered by the power unit 40 (which may be an electrical power unit in exemplary embodiments). In some embodiments (not shown), the power unit may be a combustion engine, such that the spreader tool 10 may be powered by fuel (e.g., gasoline).

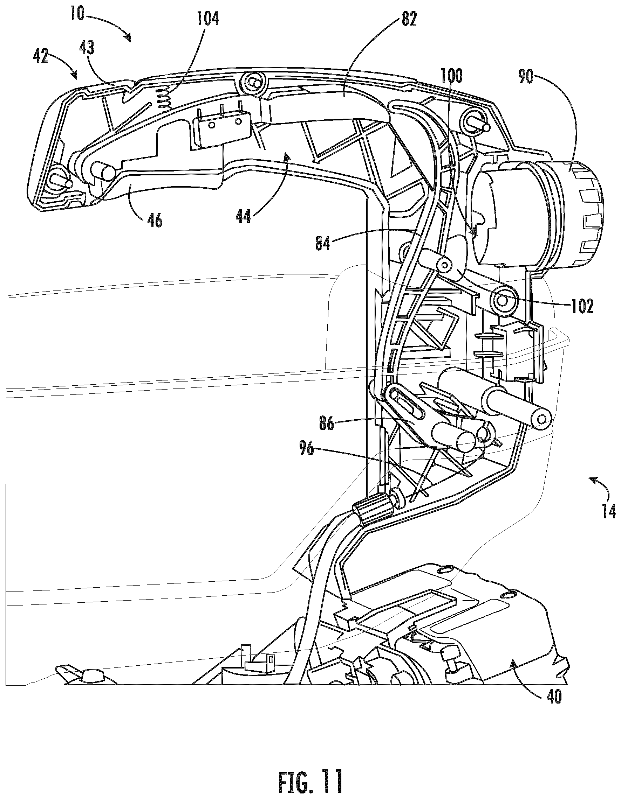

In many embodiments, the spreader tool 10 may further include a handle 42. The handle 42 may be coupled to the hopper 16 and/or the base 28. In many embodiments, as shown, the handle 42 may be positioned at the rear end 14 of the spreader tool 10. The handle 42 may extend from a rear end of the hopper 16. That is, the handle 42 may extend from, and couple to, the mounting portion 35 of the hopper 16. The handle 42 may include a vertical portion extending from the mounting portion 35 and a longitudinal portion extending from the vertical portion towards the front end 12 to a terminal end. The handle 42 may house a trigger assembly 44 (FIG. 11) having a trigger 46 that protrudes from the handle 42 (e.g., protrudes from the longitudinal portion of the handle 42). The trigger assembly 44 may selectively command articulation of energy from the power unit 40 to operate the motor(s) 52, 54 to rotate an impeller 50, an agitator 48, and/or a first distribution gate 56. That is, the trigger assembly 44 may be electrically coupled to the first motor 52 and the second motor 54 and configured to selectively command articulation of energy from the power unit 40 to operate the first and second motors 52, 54 to rotate the impeller and the agitator 48 and to open the distribution gate 56.

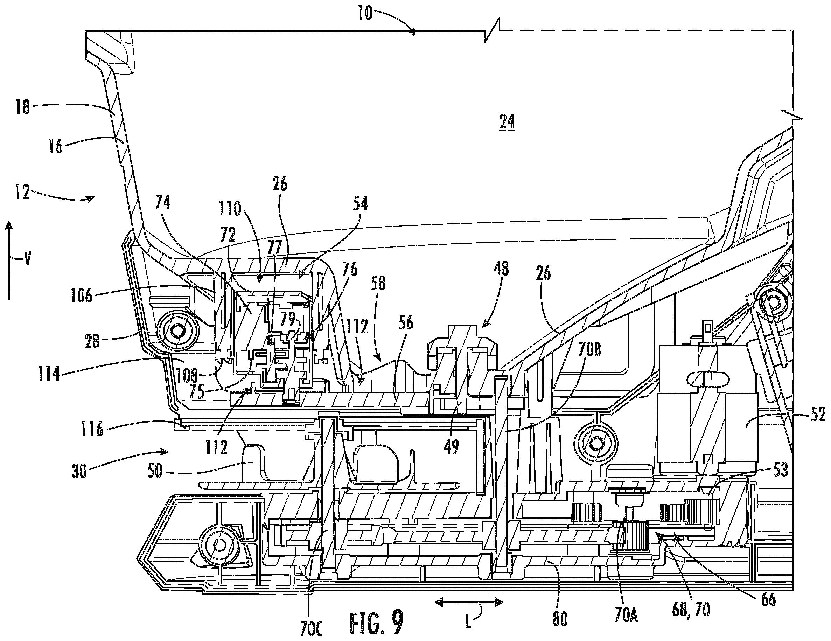

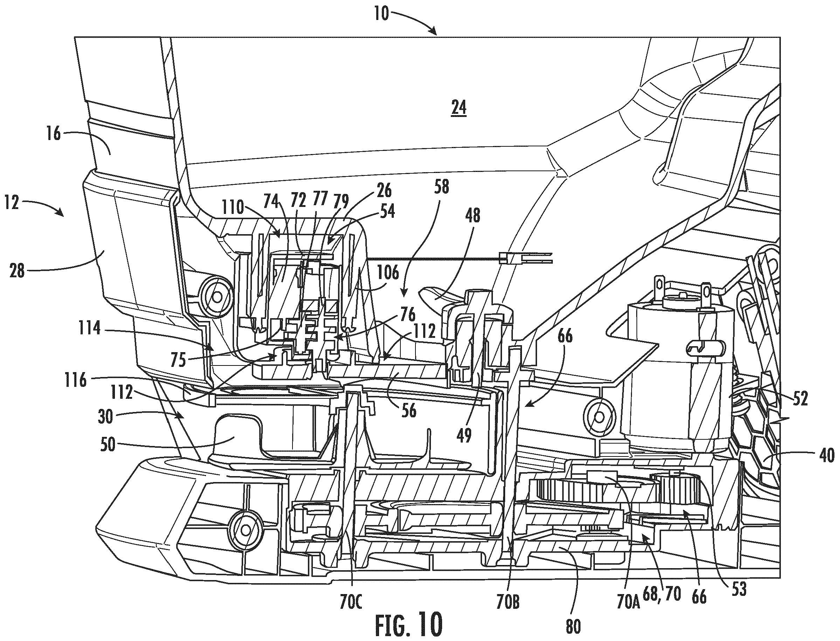

Referring specifically to FIGS. 9 and 10, two cross-sectional views of the spreader tool 10 are illustrated in accordance with embodiments of the present disclosure. As shown, the base 28 may include (and house) a motorized spreader system. The motorized spreader system may be configured to drive an agitator 48 within the hopper 16 and a rotatable impeller 50 disposed below the hopper 16 (e.g., within the base 28). The agitator 48 may be positioned at the hopper 16 (such as within the hopper 16), and the agitator operably coupled to the first motor 52 to selectively rotate with articulation of energy from the power unit 40.

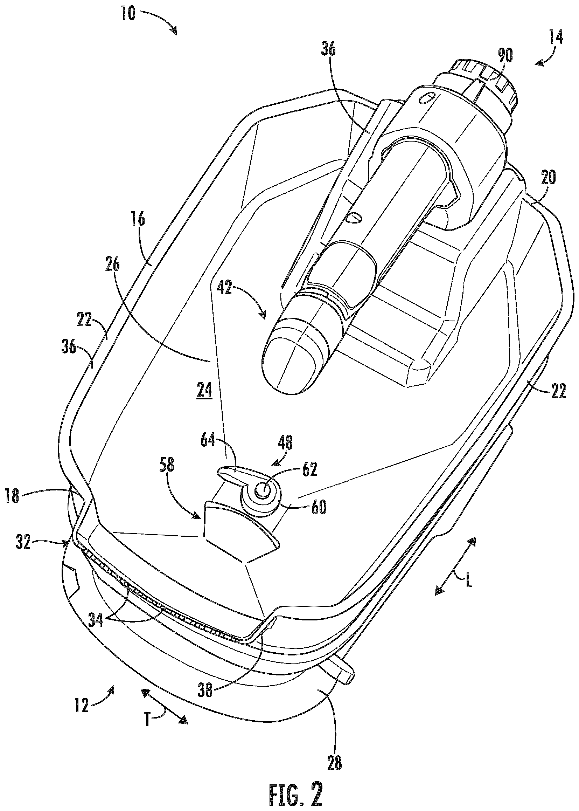

The impeller 50 may include a base and a plurality of fins extending from the base. The plurality of fins may be spaced apart from one another and may each extend upwards (e.g., towards the hopper 16). The agitator 48 may be disposed within the hopper cavity 24 adjacent (e.g., directly adjacent) to a hopper opening 58. Referring back to FIG. 2, the hopper opening 58 may be defined in the bottom wall 26 of the hopper 16. The agitator 48 may include a mounting portion 60 (e.g., that mounts to a drive shaft 62) and a tab portion 64 extending from the mounting portion 60 to a terminal end. During operation, the drive shaft 62 may rotate the agitator 48 causing the tab portion 64 to sweep across the hopper opening 58. The agitator 48 may disrupt and loosen the matter within the hopper 16 and cause the matter to fall through the hopper opening 58. The impeller 50 may be positioned at the base opening 30, and the impeller 50 may push the matter from the hopper out of the base opening 30.

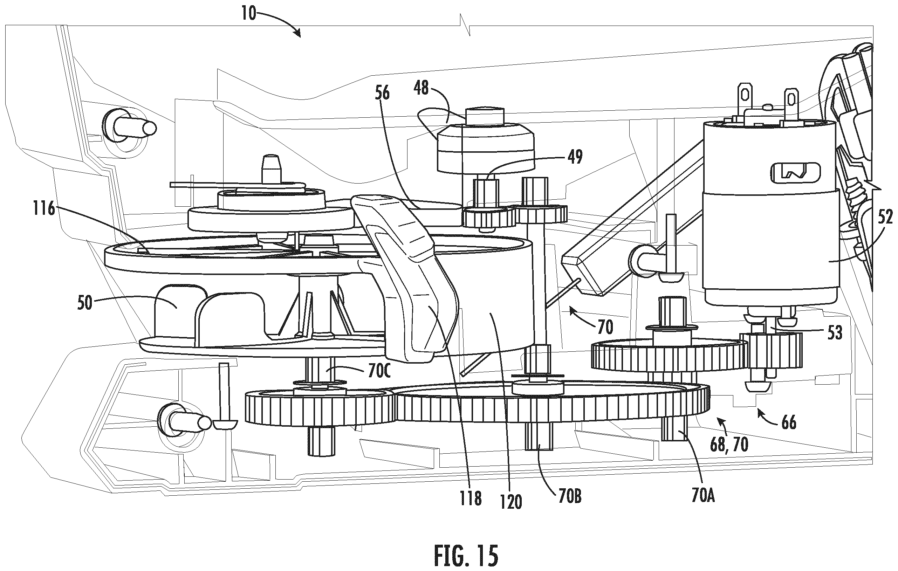

As shown in FIGS. 9 and 10, the base opening 30 may be defined at a front portion (i.e., at a front end) of the base 28, such as to project matter therefrom (e.g., seeds, fertilizer, weed control). In various embodiments, the power unit 40 (e.g., a battery, capacitor, or other power source) provides energy to operate a first motor 52 to spin both the agitator 48 and the impeller 50 to distribute matter. The first motor 52 may be operably coupled to both the agitator 48 and the impeller 50 to selectively operate the agitator 48 and the impeller 50 simultaneously. For example, a first transition assembly 66 may couple the first motor 52 to both the agitator 48 and the impeller 50, such that the first motor 52 drives both the agitator 48 and the impeller 50 via the first transmission assembly 66. The transmission assembly 66 may include a plurality of gears 68 and a plurality of shafts 70 rotatably coupled to one another. Each shaft of the plurality of shafts 70 may extend (and couple) to a respective gear of the plurality of gears 68. As shown in FIG. 15, an input shaft 70A of the plurality of shafts 70 may couple to an output shaft 53 of the first motor 52 (e.g., via a first geared connection), such that the output shaft 53 of the first motor 52 drives the input shaft 70A. A first output shaft 70B of the plurality of shafts 70 may couple to, and rotate with, the input shaft 70A (via a second geared connection) and the agitator 48. For example, the first output shaft 70B may couple to, and rotate with, an agitator shaft 49 (e.g., via a third geared connection). The agitator shaft 49 may be coupled to the agitator 48. In other embodiments, the first output shaft 70B may couple directly to the agitator 48. A second output shaft 70C of the plurality of shafts 70 may couple to, and rotate with, the first output shaft 70B (via a fourth geared connection) and the impeller 50. In this way, the first motor 52 may simultaneously drive both the agitator 48 and the impeller 50 via the first transmission assembly 66. As used herein, "geared connection" may be a connection between two gears. The first transmission 66 may be housed at least partially within a transmission housing 80 disposed within the base 28.

In many embodiments, as shown in FIGS. 9 and 10, the power unit 40 (e.g., a battery, capacitor, or other power source) may additionally provide energy to operate a second motor 54 to selectively open and close a first distribution gate 56 (e.g., a hopper opening distribution gate), such as to selectively allow or inhibit flow of matter through a hopper opening 58 to the impeller 50. The first distribution gate 56 may be positioned between the base opening 30 and the hopper opening 58. The first distribution gate 56 may be positioned below the hopper 16 and configured to selectively permit egress between the hopper 16 and the base 28. The second motor 54 is operably coupled to the first distribution gate 56, such as to control an opening and closing of the distribution gate 56 to selectively allow, inhibit, or control flow of matter through the hopper opening 58 to the impeller 50. For instance, the second motor 54 may form a servo motor. In such embodiments, the servo motor may include a controller and a feedback system that enables the servo motor to make real-time adjustments to maintain the desired speed and position, which may be advantageous when compared to a standard electric motor. The second motor 54 may selectively operate or actuate the first distribution gate 56 between an open position (allowing for matter to flow from the hopper 16) and a closed position (preventing matter from flowing from the hopper 16) at the hopper opening 58.

In many embodiments, as mentioned above, the second motor 54 may be a servo motor that includes a motor housing 72, an electric motor 74, and a second transmission assembly 76. The electric motor 74 and the second transmission assembly 76 may be positioned within the motor housing 72. The first distribution gate 56 may be operably coupled to the second transmission assembly 76. That is, the electric motor 74 and the first distribution gate 56 may be coupled to, and rotate with, the second transmission assembly 76 (e.g., via one or more geared connections). For example, an output shaft 75 of the electric motor 74 may couple to, and rotate with, an input shaft 77 of the second transmission assembly 76 (e.g., via a first geared connection). An output shaft 79 of the second transmission assembly 76 may couple to, and rotate with, the first distribution gate 56 (e.g., via a second geared connection). Utilizing a servo motor as the second motor 54 may be advantageous over a traditional motor because the built-in transmission assembly may provide for more precise control of the distribution gate 56 between the open position and the closed position. As described above, operation of the first and second motors 52, 54 spins the impeller 50 and rotates the first distribution gate 56 to an open position.

In some embodiments, the hopper 16 includes a motor mount 106 that houses the second motor 54, including the second transmission assembly 76. The first distribution gate 56 is operably coupled to the second transmission assembly 76. For instance, the first distribution gate 56 is coupled to the second transmission assembly 76 and extends across the hopper opening 58 (when in the closed position). Selective operation of the second motor 54 articulates the first distribution gate 56 between the closed position and the open position. The first distribution gate 56 may be positioned between the impeller 50 and the hopper 16 (e.g., above the impeller 50 and below the hopper 16).

In still yet some embodiments, the second motor 54 may be coupled to the motor mount 106 via a fastener 108 (e.g., a mechanical fastener, such as, but not limited to, a screw, bolt, tie rod, or threaded shank). For example, the housing 72 of the second motor 54 may be coupled to the motor mount 106 via the fastener 108 (such as a plurality of fasteners in some embodiments). The fastener 108 may extend upward along a vertical direction V. The motor mount 106 extends from the bottom wall 26 of the hopper 16 that separates a motor cavity 110 at which the second motor 54 is positioned from the hopper cavity 24 configured to receive matter for distribution. That is, the bottom wall 26 may partially define, and separate, the motor cavity 110 and the hopper cavity 24. For instance, the motor cavity 110 is formed between the bottom wall 26 of the hopper 16 and the base 28. The second motor 54 may be positioned (e.g., entirely) within the motor cavity 110. Stated otherwise, the motor cavity 110 may be configured to receive the second motor 54 therewithin. The hopper 16 separates the motor cavity 110 from the hopper cavity 24, such as to segregate matter and fluid at the hopper cavity 24 from the second motor 54.

In still some embodiments, the first distribution gate 56 may be at least partially positioned in a cavity 114 formed between the base 28 and the hopper 16 (e.g., below the second motor 54 and the motor cavity 110). For instance, at least a portion of the first distribution gate 56 may be obscured or covered within the cavity 114. The first distribution gate 56 may be positioned to seal or otherwise inhibit flow of fluid or matter from the hopper opening 58.

In various embodiments, the first distribution gate 56 forms one or more seals 112 configured to separate (e.g., fluidly segregate or otherwise prevent egress and ingress of matter) between the hopper cavity 24 from the motor cavity 110. The one or more seals 112 may advantageously segregate the motor cavity 110 from the hopper cavity 24.

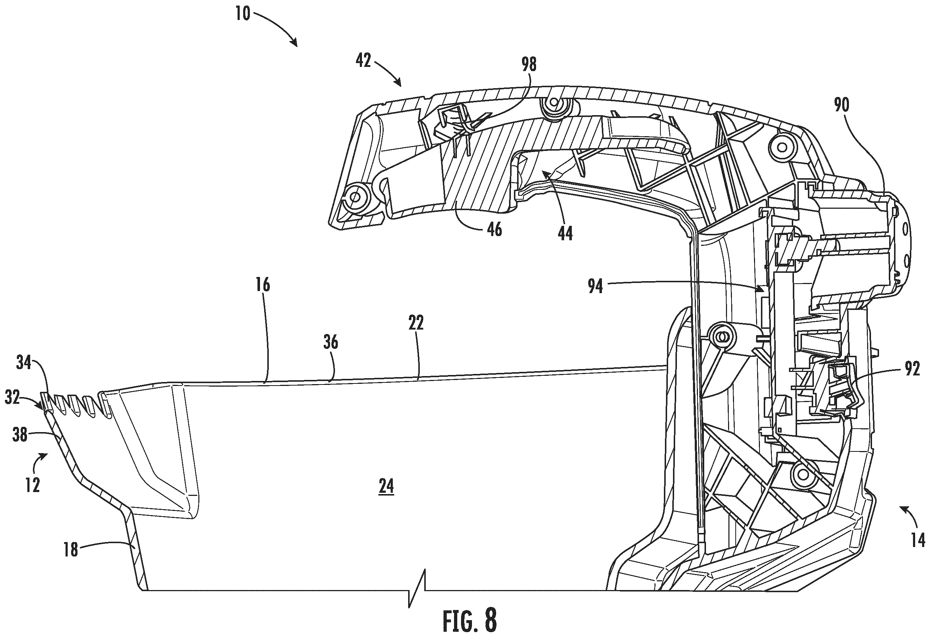

As shown in FIG. 8, the handle 42 extends upward from the hopper 16 and houses the trigger assembly 44 that includes the trigger 46. The trigger 46 on the handle 42 acts to drive the motor(s) 52, 54 to rotate the agitator 48 and impeller 50 and to open the first distribution gate 56. That is, actuation of the trigger 46 (e.g., by a user) causes the first motor 52 to rotate the agitator 48 and the impeller 50 and causes the second motor 54 to open the first distribution gate 56. The amount to which the trigger 46 is permitted to rotate the first distribution gate 56 is determined by one or more user interfaces. The user interfaces may include a dial, a switch, a button, or combinations thereof. In some embodiments, the user interface forms a dial 90 positioned behind the trigger 46, such as at a rear end 14 of the spreader tool 10 However, it should be appreciated that the user interface may, alternatively, or additionally, include a switch 92 or a button. One or more user interfaces may include a dial 90 configured to adjust a rate of egress of matter from the hopper 16 and a switch 92 configured to adjust an impeller 50 speed to control throw distance from the base opening 30.

In some embodiments, the dial 90 and the switch 92 are operably coupled to a printed circuit board assembly (PCBA) 94. Articulation of the dial 90 is configured to communicate at the PCBA 94 a speed, a change in speed, an open/close magnitude, or other control parameter at the impeller 50, the first distribution gate 56, and/or the agitator 48. In an embodiment of operation, articulating the trigger 46 causes the second motor 54 to translate the first distribution gate 56 to an open position to allow matter to egress from the hopper 16. Releasing the trigger 46 causes the second motor to translate the first distribution gate 56 to a closed position to discontinue egress of matter from the hopper 16. In various embodiments, articulation of the trigger 46 simultaneously provides energy to the first and second motors 52, 54 for rotation of the impeller 50 and agitator 48 and opening of the first distribution gate 56.

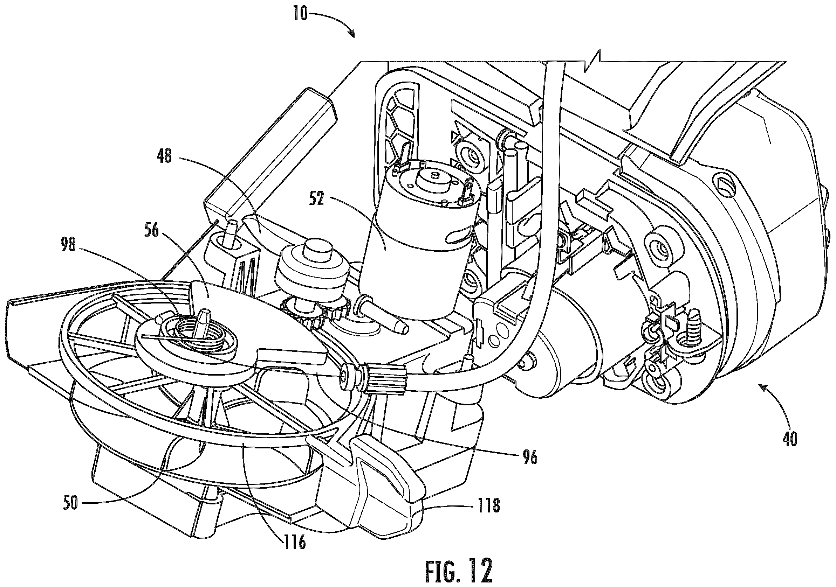

In some embodiments, as shown in FIGS. 11-15, the spreader tool 10 may not include the second motor 54, and the first distribution gate 56 may be actuated between the open position and the closed position by an entirely mechanical means. For example, as shown in FIG. 11, the trigger assembly 44 may be coupled to an actuation cable 96. As shown in FIG. 12, the actuation cable 96 may be coupled to the first distribution gate 56, such that pulling the trigger 46 provides tension to the actuation cable 96, which causes the first distribution gate 56 to move to an open position. In some embodiments, a bias member 98 may be coupled to the first distribution gate 56. The bias member 98 may bias the first distribution gate 56 closed (e.g., when the power unit 40 discontinues power or when the trigger 46 is released). In exemplary embodiments, the bias member 98 is a spring configured to bias the first distribution gate 56 closed. For example, the actuation cable 96 may be coupled to the bias member 98, and the bias member 98 may be coupled to the first distribution gate 56. Releasing the trigger 46 releases tension from the actuation cable 96, thereby causing the bias member 98 to force the first distribution gate 56 back into a closed position.

As shown in FIG. 11, the trigger assembly 44 may include one or more trigger levers 82, 84, 86 coupled to one another via a pinned connection (e.g., a rotatable connection). For example, the trigger assembly 44 may include a first trigger lever 82, a second trigger lever 84, and a third trigger lever 86. The first trigger lever 82 may couple to the trigger 46. The second trigger lever 84 may couple to the first trigger lever 82 and the third trigger lever 84. The third trigger lever 86 may couple to the handle 42 (such as a housing 43 of the handle 42). As shown, the third trigger lever 84 may be coupled to the actuation cable 96.

As shown in FIG. 11, the dial 90 may include a cam surface 100, and the second trigger lever 84 may include a contact member 102. Action of the trigger 46 may cause the contact member 102 to translate into contact with the cam surface 100. The contact member 102 engages against the cam surface 100 when the second trigger lever 84 is rotated by action of the trigger 46. A position of the dial 90 limits rotation of the trigger lever 84 and travel of the actuation cable 96. In this way, rotation of the dial 90 by the user (e.g., to change the discharge rate of granular material from the hopper) changes an orientation of the cam surface 100. Changes in the orientation of the cam surface 100 correspond to a change in distance between the contact member 102 and the cam surface 100. For instance, the cam surface 100 may be a sloped or stepped surface. The distance between the contact member 102 and the cam surface 100 corresponds to a degree of rotation of the dial 90, which corresponds with a discharge rate of granular material from the hopper 16. For example, rotating the dial 90 impacts on the allowable travel of the actuation cable 96 when the trigger 46 is pulled, thereby impacting the amount the first distribution gate 56 is opened, which impacts the distribution rate from the hopper 16. In this way, a user may adjust the discharge rate by rotating the dial 90.

In various embodiments, a spring 104 may be disposed between the trigger 46 and the handle 42. The spring 104 biases the trigger 46 downward (e.g., opposite the direction of engagement). In some embodiments, a single spring 104 biases the trigger 46 downward. The spring 104 is positioned within the housing 43 forming the handle 42, such as to provide a surface at which the spring 104 biases the trigger 46 downward.

As shown in FIG. 11-15, the first transmission assembly 66 operably couples the first motor 52 to the impeller 50 and the agitator 48, such that articulation of the trigger 46 provides energy from the power unit 40 to the first motor 52 to spin the impeller 50 and the agitator 48 (e.g., simultaneously). As discussed above, the first transmission assembly 66 includes shafts, gears, rotors, and meshes among one another to transmit linear or rotational motion from the first motor into selective rotation of both the impeller 50 and the agitator 48.

In various embodiments, the spreader tool 10 may include a second distribution gate 116 or base opening distribution gate. The second distribution gate 116 may be positioned above the impeller 50 and below the first distribution gate 56. The second distribution gate 116 may be selectively articulated between an open and a closed position. The second distribution gate 116 may include a tab 118 and a shield wall 120. The second distribution gate 115 may be coupled to the impeller 50 and/or the second output shaft 70C. However, the second distribution gate 116 does not rotate with the impeller 50. The second distribution gate 116 may be rotated (e.g., by pushing or pulling the tab 118) allowing a user to manually open, close, or partially open/close the base opening 30 by blocking a portion of the base opening 30 with the shield wall 120. For instance, the second distribution gate 116 may be positioned in rotatable arrangement and include the shield wall 120 configured to at least partially obscure the base opening 30, such as to inhibit or re-direct egress of matter through the base opening 30. In some embodiments, the tab 118 may form an edge guard allowing the user to limit a trajectory along which matter may distribute from the base opening by adjusting a position of the second distribution gate 116. For instance, the user may rotate the tab 118 to allow a user to walk along a sidewalk, building, or other structure without distributing matter to a side where the matter is not desired (e.g., to inhibit egress of matter onto the sidewalk, building, or structure).

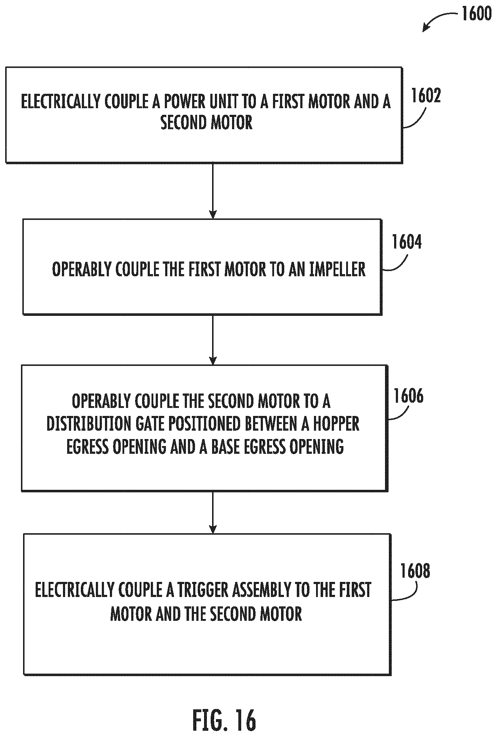

Referring now to FIG. 16, a flow diagram of one embodiment of a method 1600 for distributing matter from a spreader tool is illustrated in accordance with embodiments of the present subject matter. In general, the method 1600 will be described herein with reference to the spreader tool 10 described above with reference to FIGS. 1-15. However, it will be appreciated by those of ordinary skill in the art that the disclosed method 1600 may generally be utilized with any suitable system and/or may be utilized in connection with a system having any other suitable system configuration. In addition, although FIG. 16 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

As shown in FIG. 16, the method 1600 may include (e.g., an initial step) at 1602 of electrically coupling a power unit to a first motor and a second motor. This may initiate rotation of both the first motor and the second motor. The method 1600 may further include at 1604 operably coupling the first motor to an impeller. In some embodiments, the first motor may be coupled to both the impeller and an agitator. In various embodiments, the method 1600 may further include at 1606 operably coupling the second motor to a distribution gate positioned between a hopper egress opening and a base egress opening. In exemplary embodiments, the method 1600 may finally include at 1608 electrically coupling a trigger assembly to the first motor and the second motor. In such implementations, actuation of the trigger assembly provides energy from the power unit to the first motor to spin the impeller (and/or the agitator) and to the second motor to rotate the distribution gate to an open position.

In some implementations, the method may further include discontinuing actuation of the trigger assembly to close the distribution gate. In such implementations, a bias member (such as a spring) may be coupled to the distribution gate to force the distribution gate closed when the power unit discontinues energy to the motor. In various embodiments, operably coupling the first motor to the impeller and the second motor to the distribution gate at 1604 and 1605 may further include operably coupling the first motor to the impeller and the second motor to the distribution gate via or across a transmission assembly.

Embodiments depicted and described herein may provide a spreader tool 10 with reduced complexity, such as fewer pathways and mechanical structures, for distributing matter (e.g., seeds, grains) from the hopper 16. The motor(s) 52, 54 may control a speed, distribution rate, and volumetric flow rate of matter.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects of the invention are provided by the subject matter of the following clauses:
A spreader tool, comprising: a hopper disposed above a base, wherein the base comprises a base opening forming an egress; an impeller disposed below the hopper; a distribution gate positioned below the hopper and configured to selectively permit egress between the hopper and the base; one or more motors operably coupled to a power unit and the impeller and the distribution gate, the one or more motors configured to selectively rotate the impeller and the distribution gate; and a handle comprising a trigger assembly, the trigger assembly configured to selectively command articulation of energy from the power unit to operate the motor to rotate the impeller and the distribution gate.

The spreader tool of any preceding clause, comprising: a scoop positioned at a front end of the hopper.

The spreader tool of any preceding clause, wherein the scoop comprises a plurality of teeth positioned at an upper lip of the hopper.

The spreader tool of any preceding clause, comprising: an agitator positioned at the hopper, the agitator operably coupled to the motor to selectively rotate with articulation of energy from the power unit.

The spreader tool of any preceding clause, comprising: a first transmission assembly operably coupling a first motor of the one or more motors to the impeller; and a second transmission assembly operably coupling a second motor of the one or more motors to the distribution gate, wherein operation of the first and second motors spins the impeller and rotates the distribution gate to an open position.

The spreader tool of any preceding clause, wherein the hopper comprises a motor mount configured to receive the second motor and second transmission assembly, wherein the distribution gate is operably coupled to the second transmission assembly.

The spreader tool of any preceding clause, wherein the second motor is coupled to the motor mount via a fastener, wherein the motor mount extends from a bottom wall separating a motor cavity at which the second motor is positioned from a hopper cavity.

The spreader tool of any preceding clause, wherein a motor cavity is formed between a bottom wall of the hopper and the base, the motor cavity configured to receive the second motor therewithin.

The spreader tool of any preceding clause, wherein the impeller is positioned at the base opening, and wherein the distribution gate is positioned between the impeller and the hopper.

The spreader tool of any preceding clause, comprising: a base opening distribution gate, the base opening distribution gate comprising a tab and configured to articulate between an open and a closed position.

The spreader tool of any preceding clause, wherein the handle extends from a rear end of the hopper.

The spreader tool of any preceding clause, wherein the handle comprises one or more user interfaces configured to adjust a rate of egress from the hopper, a speed of the impeller, or both.

The spreader tool of any preceding clause, wherein the power unit is positioned at the rear end of the base.

The spreader tool of any preceding clause, comprising: a bias member coupled to the distribution gate, the bias member configured to bias the distribution gate closed, and wherein the bias member is a spring configured to bias the distribution gate closed.

A method for distributing matter from a spreader tool, the method comprising: electrically coupling a power unit to a first motor and a second motor; operably coupling the first motor to an impeller; operably coupling the second motor to a distribution gate positioned between a hopper egress opening and a base egress opening; and electrically coupling a trigger assembly to the first motor and the second motor, wherein actuation of the trigger assembly provides energy from the power unit to the first motor to spin the impeller and to the second motor to rotate the distribution gate to an open position.

The method of any preceding clause, comprising: discontinuing actuation of the trigger assembly to close the distribution gate.

The method of any preceding clause, wherein operably coupling the first motor to the impeller and the second motor to the distribution gate comprises operably coupling the first motor to the impeller and the second motor to the distribution gate via a transmission assembly.

The method of any preceding clause, comprising: operably coupling the motor to an agitator positioned at the hopper, wherein actuation of the trigger assembly provides energy from the power unit to the motor to spin the agitator.

A handheld spreader tool, comprising: a hopper disposed above a base, wherein the hopper comprises a hopper opening forming an egress to the base, and wherein the base comprises a base opening forming an egress from the base; an impeller disposed below the hopper; a distribution gate positioned below the hopper and above the base, the distribution gate configured to selectively permit egress between the hopper and the base; a first motor electrically coupled to a power unit and operably coupled to the impeller, the first motor configured to selectively spin the impeller; a second motor electrically coupled to the power unit and operably coupled to the distribution gate positioned between the base opening and the hopper opening, the second motor configured to selectively open the distribution gate; and a handle comprising a trigger assembly, the trigger assembly electrically coupled to the first and second motors and configured to selectively command articulation of energy from the power unit to operate the first and second motors to rotate the impeller and open the distribution gate.

The handheld spreader tool of any preceding clause, comprising: a scoop positioned at a front end of the hopper.

## Claims

1. A spreader tool (10), comprising:
a hopper (16) disposed above a base (28), wherein the base (28) comprises a base opening (30) forming an egress;
an impeller (50) disposed below the hopper (16);
a distribution gate (56) positioned below the hopper (16) and configured to selectively permit egress between the hopper (16) and the base (28);
one or more motors (52, 54) operably coupled to a power unit (40) and the impeller (50) and the distribution gate (56), the one or more motors (52, 54) configured to selectively rotate the impeller (50) and the distribution gate (56); and
a handle (42) comprising a trigger assembly (44), the trigger assembly (44) configured to selectively command articulation of energy from the power unit (40) to operate the motor (52, 54) to rotate the impeller (50) and the distribution gate (56).

2. The spreader tool (10) of claim 1, comprising:
a scoop (32) positioned at a front end (12) of the hopper (16).

3. The spreader tool (10) of claim 2, wherein the scoop (32) comprises a plurality of teeth (34) positioned at an upper lip (36) of the hopper (16).

4. The spreader tool (10) of claim 1, comprising:
an agitator (48) positioned at the hopper (16), the agitator (48) operably coupled to the motor to selectively rotate with articulation of energy from the power unit (40).

5. The spreader tool (10) of claim 1, comprising:
a first transmission assembly (66) operably coupling a first motor (52) of the one or more motors (52, 54) to the impeller (50); and
a second transmission assembly (76) operably coupling a second motor (54) of the one or more motors (52, 54) to the distribution gate (56), wherein operation of the first and second motors (52, 54) spins the impeller (50) and rotates the distribution gate (56) to an open position.

6. The spreader tool (10) of claim 5, wherein the hopper (16) comprises a motor mount (106) configured to receive the second motor (54) and second transmission assembly (76), wherein the distribution gate (56) is operably coupled to the second transmission assembly (76).

7. The spreader tool (10) of claim 6, wherein the second motor (54) is coupled to the motor mount (106) via a fastener (108), wherein the motor mount (106) extends from a bottom wall (26) separating a motor cavity (110) at which the second motor (54) is positioned from a hopper (16) cavity.

8. The spreader tool (10) of claim 6, wherein a motor cavity (110) is formed between a bottom wall (26) of the hopper (16) and the base (28), the motor cavity (110) configured to receive the second motor (54) therewithin.

9. The spreader tool (10) of claim 1, wherein the impeller (50) is positioned at the base opening (30), and wherein the distribution gate (56) is positioned between the impeller (50) and the hopper (16).

10. The spreader tool (10) of claim 1, comprising:
a base opening distribution gate (116), the base opening distribution gate (116) comprising a tab (118) and configured to articulate between an open and a closed position.

11. The spreader tool (10) of claim 1, wherein the handle (42) extends from a rear end (14) of the hopper (16).

12. A method for distributing matter from a spreader tool (10), the method comprising:
electrically coupling a power unit (40) to a first motor (52) and a second motor (54);
operably coupling the first motor (52) to an impeller (50);
operably coupling the second motor (54) to a distribution gate positioned between a hopper (16) egress opening and a base (28) egress opening; and
electrically coupling a trigger assembly (44) to the first motor (52) and the second motor (54), wherein actuation of the trigger assembly (44) provides energy from the power unit (40) to the first motor (52) to spin the impeller (50) and to the second motor (54) to rotate the distribution gate to an open position.

13. The method of claim 12, comprising:
discontinuing actuation of the trigger assembly (44) to close the distribution gate.

14. The method of claim 12, wherein operably coupling the first motor (52) to the impeller (50) and the second motor (54) to the distribution gate comprises operably coupling the first motor (52) to the impeller (50) and the second motor (54) to the distribution gate via a transmission assembly.

15. The method of claim 12, comprising:
operably coupling the motor to an agitator (48) positioned at the hopper (16), wherein actuation of the trigger assembly (44) provides energy from the power unit (40) to the motor to spin the agitator (48).
